# EUROPÄISCHE PATENTSCHRIFT

(11) **EP 1 011 183 B1**
(45) Veröffentlichungstag und Bekanntmachung des Hinweises auf die Patenterteilung: **18.10.2006**
(21) Anmeldenummer: 99123809.8
(22) Anmeldetag: 01.12.1999
(51) Int. Cl.: H02H 3/33

(54) **Fehlerstromschutzschaltungsanordnung**
Earth leakage protective circuit arrangement
Disposition de circuit de protection de courant de défaut à la terre

(30) Priorität: 15.12.1998 DE 19857739
(43) Veröffentlichungstag der Anmeldung: 21.06.2000
(73) Patentinhaber: ABB PATENT GmbH, 68526 Ladenburg (DE)
(72) Erfinder: Kahl, Walter, Dipl.-Ing., 69190 Walldorf (DE); Popa, Heinz-Erich, Dr. Ing., 69245 Bammental (DE)
(74) Vertreter: Miller, Toivo

(56) Entgegenhaltungen:
- DE-A- 3 823 099
- DE-A- 19 735 412

## Beschreibung

Die Erfindung betrifft eine Fehlerstromschutzschaltungsanordnung gemäß dem Oberbegriff des Anspruches 1.

In elektrischen Anlagen wird zur Erhöhung der Verfügbarkeit elektrischer Energie das Prinzip der Selektivität verwendet. Hierbei soll in einem Netz mit mehreren Verbrauchern vermieden werden, daß bei Auftreten eines Fehlers bei einem Verbraucher die gesamte, zugehörige Netzanlage abgeschaltet wird.

Aus der DE 196 02 911 ist eine Schaltungsanordnung zur Detektion eines Fehlerstromes bekannt geworden, bei dem die Primärwicklung durch einen Summenstromwandler hindurchgeleitet wird; auf dem Stromwandler befinden sich zwei Wicklungen, von denen eine mit einem Auslöser verbunden ist, wogegen die andere zur Vormagnetisierung des Kerns dient. Mit dieser Ausgestaltung kann sowohl ein Wechselfehlerstrom als auch ein Gleichfehlerstrom detektiert werden, weil bei Auftreten eines Gleichfehlerstromes wegen der Vormagnetisierung des Kerns sich dessen Induktion ändert, was mittels einer geeigneten Auswerteschaltung detektiert werden kann.

Aus der DE 25 55 255 C3 ist eine Fehlerstromschutzschalteranordnung bekannt geworden, bei der zwei Summenstromwandler vorgesehen sind, die beide von einem netzstromversorgten Generator vormagnetisiert werden, damit die Schaltungsanordnung auch bei Gleichfehlerströmen ansprechen kann.

Aus der DE 38 23 097 A1 ist ein selektiver Hauptschalter einer Anordnung zum Schutz vor Fehlerströmen aus einem Hauptschalter und nachgeordneten Zweigschaltern bekannt geworden. Dabei soll der Hauptschalter zwei Untereinrichtungen besitzen, von denen die eine nach dem Wirkungsprinzip eines Fehlerstromschutzschalters einer ersten Gattung von Fehlerströmen und die andere zur Erfassung von Fehlerströmen aus glattem Gleichstrom aufgebaut ist. Wie schlußendlich die Schaltungsanordnung aufgebaut ist, ist der DE 38 23 097 A1 nicht zu entnehmen.

Aus der DE 38 23 099 C2 ist eine Einrichtung zum Schutz vor Fehlerströmen der eingangs genannten Art bekannt geworden. Die sog. erste Untereinrichtung spricht auf Wechselstrom oder auf gepulsten Gleichstrom netzspannungsunabhängig an; die zweite Untereinrichtung besitzt einen zweiten Summenstromwandler, der vormagnetisiert wird, wobei die Frequenz der Vormagnetisierung der Netzfrequenz entspricht. Die Ankoppelung der zweiten Untereinrichtung an die erste Untereinrichtung erfolgt über einen Brückengleichrichter, dessen Dioden nicht vollständig verhindern können, daß die eine Schaltung die andere beeinflußt. Wenn beispielsweise ein Gleichfehlerstrom und ein Wechselfehlerstrom vorhanden sind, die für sich jeweils kleiner sind als der Nennfehlerstromwert, dann kann eine Auslösung erfolgen, da sich aufgrund der Brückenschaltung beide Fehlerströme am Auslöser addieren können.

Aus der DE 197 35 412 A1 ist eine Schaltungsanordnung bekannt geworden, bei der der ersten Untereinrichtung, die Wechsel- oder Pulsfehlerströme netzspannungsunabhängig erfaßt, eine Entkopplungsschaltung zugeordnet ist.

Aufgabe der Erfindung ist es, eine Fehlerstromschutzschaltungsanordnung der eingangs genannten Art zu schaffen, die als allstromsensitive Schaltungsanordnung auch selektive Eigenschaften aufweist und gegenüber den bekannten Schaltungsanordnungen verbessert ist.

Diese Aufgabe wird erfindungsgemäß gelöst durch die kennzeichnenden Merkmale des Anspruches 1.

Erfindungsgemäß ist demnach die erste Teileinrichtung eine Energiespeicherschaltung mit einem ersten Energiespeicher. Die Vormagnetisierungseinrichtung der zweiten Teileinrichtung ist ein Oszillator, der den Kern mit einer vorbestimmten Frequenz vormagnetisiert und die zweite Teileinrichtung mit einem zweiten Energiespeicher ist über einen steuerbaren Halbleiter und einen Schwellwertschalter mit dem ersten Energiespeicher verbunden, so daß bei Auftreten eines Fehlerstromes der Energiespeicher erst bei Erreichen eines vorbestimmten Fehlerstromes aufgeladen wird; zur Entkopplung beider Teileinrichtungen befindet sich zwischen dem ersten Energiespeicher und dem Schwellwertschalter eine Diode, die zum ersten Energiespeicher hin in Durchlaßrichtung geschaltet ist.

Im Gegensatz zur DE 38 23 099 C2 ist die erste Teileinrichtung als Energiespeicherschaltung ausgebildet. Der in der Zeichnung der Entgegenhaltung dargestellte Kondensator dient lediglich zur Erfassung von Pulsfehlerströmen, nicht aber als Energiespeicher. Die Vormagnetisierungseinrichtung ist beim Anmeldungsgegenstand ein Oszillator, so daß der Kern mit Frequenzen vormagnetisiert werden kann, die höher sein können als die Netzfrequenz. Dadurch wird die Wirksamkeit und Zuverlässigkeit der Fehlerstromschutzschaltungsanordnung erhöht.

Beide Teileinrichtungen sind zusammen mit einem einen Gleichrichter aufweisenden Netzteil auf einer gemeinsamen Leiterplatte aufgebracht.

Gemäß einer weiteren Ausgestaltung der Erfindung kann die zweite Teileinrichtung als Oszillator einen Sinusgenerator aufweisen, dessen Ausgang den zweiten Summenstromwandler vormagnetisiert. Bei Auftreten eines Fehlerstromes ändert sich die Induktion des Summenstromwandlers, was ausgewertet wird, so daß der Energiespeicher der ersten Teileinrichtung aufgeladen wird.

Darüber hinaus besitzt die Fehlerstromschutzschaltungsanordnung einen Prüfstromkreis, der erfindungsgemäß dem zweiten Summenstromwandler zugeordnet ist.

Die besonderen Vorteile der Schaltungsanordnung bestehen darin, daß sie einen selektiven Allfehlerstromhauptschutzschalter schafft. Darüber hinaus kann der Fehlerstromschutzschalter zeitverzögert auslösen sowie eine hohe Stoßstromfestigkeit aufweisen. Die erfindungsgemäße Anordnung ist weiterhin bei einem FI/LS-Schalter mit hoher Stoßstromfestigkeit und mit selektiven Eigenschaften zu verwenden.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine schematische Blockschaltbilddarstellung der Fehlerstromschutzschaltungsanordnung, und
- Fig. 2: eine Schaltungsanordnung für die Fehlerstromschutzschaltung gemäß Fig. 1.

In einem dreiphasigen Netz mit den drei Phasenleitern L1, L2 und L3 sowie mit dem Neutralleiter N sind zwei Summenstromwandler 10 und 11 vorgesehen, wobei die Netzleiter als Primärwicklungen durch die Wandler 10 und 11 hindurchgeführt werden. In den Netzleitungen befinden sich Kontaktstellen 12 für die Phasenleiter L1 bis L3 und den Neutralleiter, die von einem Schaltschloß 13 angetrieben werden, so daß das Schaltschloß 13, welches eine Verklinkungsstelle (nicht gezeigt) aufweist, die Kontaktstellen 12 bleibend öffnet. Dem Schaltschloß ist weiterhin ein Betätigungsknopf 14 zugeordnet, mit dem das Schaltschloß bzw. der Fehlerstromschutzschalter ein- bzw. ausgeschaltet werden kann.

Die Sekundärwicklung 15 des Wandlers 11 ist einer Auslöseeinrichtung 16 zugeordnet, die selektiv ausgestaltet ist und auf Wechselfehlerströme anspricht und die netzspannungsunabhängig über einen nicht näher dargestellten Auslöser das Schaltschloß entklinkt.

Dem weiteren Wandler 10 ist eine weitere Sekundärwicklung 17 zugeordnet, die mit einer weiteren Auswerteeinrichtung 18 verbunden ist, die allstromsensitiv und selektiv ist und mit Netzleiterverbindungen 19 mit Strom versorgt wird.

Dem zweiten Summenstromwandler 10 ist ein Prüfkreis 20 zugeordnet, der einen Prüfwiderstand 21 aufweist und der durch den Summenstromwandler 10 hindurchgeführt ist. Der Prüfkreis befindet sich zwischen dem Phasenleiter L3 und dem Neturalleiter N. Er besitzt eine Prüftaste 22, bei deren Schließen ein Fehlerstrom simuliert wird, der von der weiteren Auswerteeinrichtung 18 detektiert wird und zur Entklinkung des Schaltschlosses 13 führt.

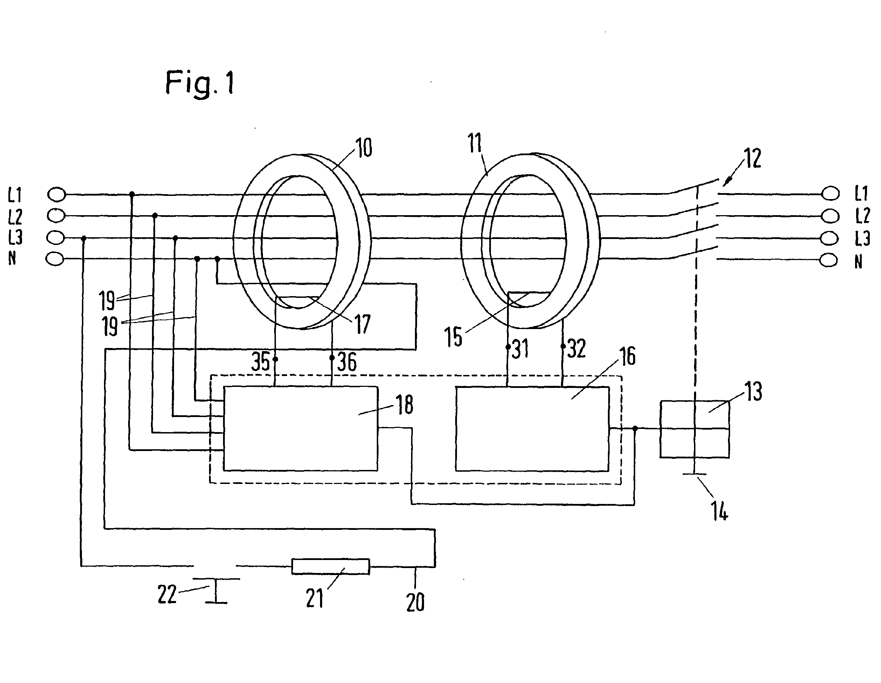

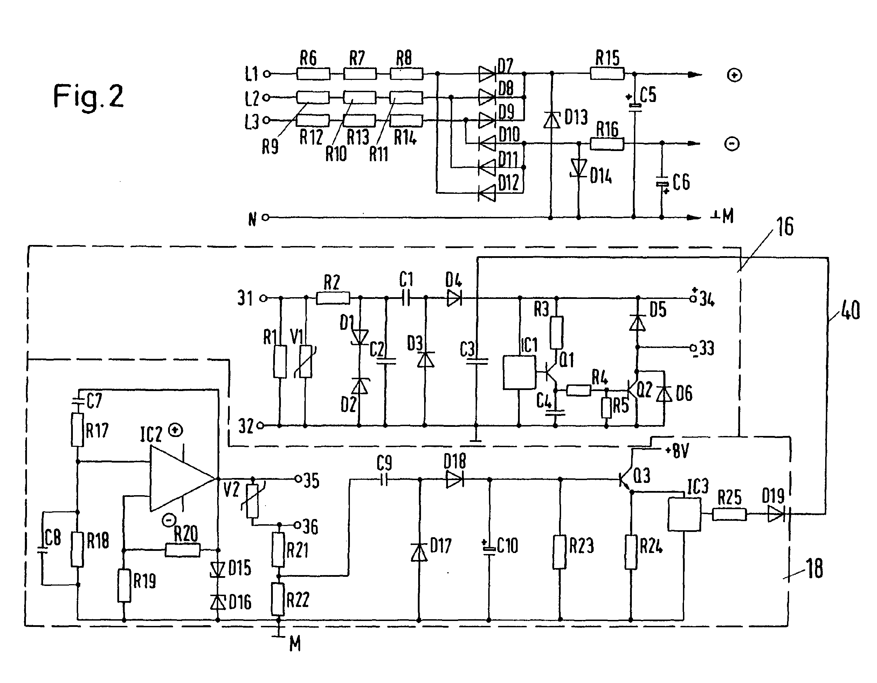

Die Fig. 2 zeigt die Schaltungsanordnung gemäß Fig. 1 im Detail.

An die Netzleiter L1, L2 und L3 sowie den Neutralleiter N ist eine Stromversorgungseinrichtung angeschlossen, mit der über Dioden D7 bis D12 und weitere Beschaltungselemente, nämlich Widerstände R6 bis R14, einen damit in Reihe liegenden Kondensator C5, 2 Schwellwertschalter D13 und D14 sowie einen weiteren Kondensator C6 eine Plus- bzw. Minusspannung gegenüber Masse M erzeugt wird.

Eine derartige Stromversorgungseinrichtung ist als Netzteil an sich bekannt.

Mit diesem Netzteil wird nun die Einrichtung 18 angesteuert, die in der Fig. 2 durch die unten befindlichen strichlierten Linien abgeteilt ist. Die in Fig. 1 im Blockschaltbild 16 dargestellte Schaltungsanordnung dient zur netzstromunabhängigen Erfassung eines Fehlerstromes.

Es sei nun zunächst die letztere Schaltungsanordnung 16 betrachtet.

Die Anschlußklemmen 31 und 32 schließen die Schaltungsanordnung 16 an die Sekundärwicklung 15 des Wandlers 11 an. Parallel zu den Anschlußklemmen 31 und 32 liegt ein Widerstand R1 und parallel hierzu ein Varistor V1 und in Reihe mit der Anschlußklemme 31 ein Widerstand R2, ein Kondensator C1 sowie eine Diode D4, die in Richtung auf die einem Auslöser (nicht gezeigt) zugehörige Anschlußklemme 34 im Durchlaß geschaltet ist.

Zwischen dem Widerstand R2 und dem Kondensator C1 sind zwei Zenerdioden D1 und D2 parallel zu den Anschlußklemmen 31 und 32 geschaltet, die in ihrer Durchlaßrichtung entgegengesetzt geschaltet sind. Parallel zu den beiden Zenerdioden ist ein Kondensator C2 geschaltet; zwischen dem Kondensator C1 und der Diode D4 ist eine weitere Diode D3 parallel zu den Anschlußklemmen 31, 32 eingesetzt, die zusammen mit der Diode D4 eine Gleichrichteranordnung darstellt. Hinter der Diode D4 und parallel zu den Anschlußklemmen 31 und 32 ist ein erster Speicherkondensator C3 geschaltet. Parallel zu diesem ersten Speicherkondensator C3 befindet sich eine Ansteuereinheit IC1 für einen Transistor Q1, dessen Kollektor über einen Widerstand R3 mit der Anschlußklemme 31 verbunden und dessen Emitter über einen Kondensator C4 zur Erde geschaltet sind. Zwischen dem Emitter des Transistors Q1 und dem Kondensator C4 schließt eine Parallelschaltung eines Widerstandes R4 und R5 an, wobei der Widerstand R5 parallel zur Basis - Emitterstrecke eines weiteren Transistors Q2 geschaltet ist. Zwischen dem Emitter und dem Kollektor des Transistors Q2 ist eine Freilaufdiode D6 angeordnet, und zwischen dem Kollektor des Transistors Q2 und der Verbindungsleitung zwischen der Anschlußklemme 31 und 34 ist eine Diode D5 geschaltet, wobei diese Diode D5 hin zu der Verbindungsleitung in Durchlaßrichtung geschaltet ist. Zwischen dem Anschluß der Diode D6 am Kollektor des Transistors Q2 und der Diode D5 ist ein zweiter Anschluß 33 vorgesehen, der die andere Anschlußklemme des nicht mehr dargestellten Auslösers bildet.

Der Widerstand R1 dient einer Bedämpfung; der Varistor V1 mit den Zenerdioden D1 und D2 erhöht die Stoßstromfestigkeit. Die Kondensatoren C1 und C2 zusammen mit den Dioden D3 und D4 bilden einen Standardspannungsverdoppler; das Ansteuerelement IC1 ist ein Komparator. Der Kondensator C4 hält den Ladezustand für den Ausgangsimpuls aufrecht.

Im Falle eines Fehlerstromes an der Sekundärwicklung zwischen den Klemmen 31 und 32 wird der erste Speicherkondensator C3 aufgeladen, der über das Ansteuerelement IC1 den Transistor Q1 ansteuert; der Transistor Q1 steuert den Transistor Q2 an, so daß sich die in dem ersten Speicherkondensator C3 geladene Energie auf die Anschlußklemmen 33 und 34 des Auslösers entladen kann.

Nun sei die Schaltungsanordnung 18 betrachtet:

Die Anschlußklemmen 35 und 36 sind mit der Sekundärwicklung 17 des Summenstromwandlers 10 verbunden. Parallel zu den Anschlußklemmen 35 und 36 liegt ein Varistor V2, der am Ausgang eines Operationsverstärkers IC2, der vom Netzteil (Plus, Minus) mit Energie versorgt wird, mit seinem einen Ende angeschlossen ist, wobei der Ausgang des Operationsverstärkers IC2 mit der Anschlußklemme 35 verbunden ist.

Der eine, nicht invertierende Eingang des Operationsverstärkers IC2, der mit seinem Ausgang verbunden ist, enthält einen Widerstand R17 sowie einen Kondensator C7; der Ausgang ist außerdem über eine Parallelschaltung eines Widerstandes R18 und eines Kondensators C8 mit Erde M oder Masse M verbunden.

Der andere, invertierende Eingang des Operationsverstärkers IC2 ist einerseits über einen Widerstand R19 mit Masse und andererseits über einen Widerstand R20 als Beschaltungselement mit seinem Ausgang verbunden; zwischen dem Ausgang und dem Widerstand R20 und Masse befinden sich zwei Zenerdioden D15 und D16.

Der Komparator IC2 zusammen mit seiner Beschattung, bei dem der Kondensator C7 und der Widerstand R17 an dem nichtinvertierenden Eingang angeschlossen ist, dient als Oszillator, als Sinusgenerator, so daß am Ausgang des Komparators IC2 ein Sinussignal erzeugt wird, welches über die Anschlußklemmen 35 und 36 zur Spule des zweiten Summenstromwandlers 10 geführt wird, wodurch der Summenstromwandler mit diesem Sinussignal vormagnetisiert, d. h. auf- bzw. abmagnetisiert wird. Dadurch, daß das Ausgangssignal des Komparators IC2 ein Sinussignal ist, ist die Verlustleistung gering, was bei Rechtecksignalen nicht der Fall wäre.

In Reihe mit dem Varistor V2 und Masse M liegt ein Spannungsteiler mit den Widerständen R21 und R22. Zwischen den beiden Widerständen R21 und R22 liegt ein Kondensator C9 sowie eine Gleichrichterschaltung mit den Dioden D17 und D18 und parallel hierzu befindet sich ein zweiter Speicherkondensator C10. Parallel zu diesem liegt ein weiterer Widerstand R23; am Verbindungspunkt zwischen dem zweiten Speicherkondensator C10 und dem Widerstand R23 ist die Basis eines Transistors Q3 angeschlossen, dessen Kollektor an dem Pluspol der Versorgungsspannung und dessen Emitter mit einem Komparator IC3 verbunden ist, dessen Ausgangssignal über einen Widerstand R25 und einer im Durchlaß geschalteten Diode D19 über die Leitung 40 dem Speicher C3 zugeführt wird. Parallel zu dem Komparator IC3 befindet sich ein Widerstand R24.

Der zweite Speicherkondensator C10 dient als Energiespeicher für ein von dem zugehörigen Summenstromwandler 10 herrührendes Fehlerstromsignal und dient auch zur Erhöhung der Stoßstromfestigkeit.

Wenn ein Fehlerstrom auftritt, insbesondere ein Gleichfehlerstrom, dann verschiebt sich die Hysterse des Summenstromwandlers, wobei sich die lmpedanz der Spule ändert, d. h. daß die Induktivität sinkt, so daß am Spannungsteiler R21/R22 eine veränderte Spannung als Signal abgenommen werden kann. Dieses sekundärseitige Signal wird dem zweiten Speicherkondensator C10 zugeführt, und über diesen wird der Transistor Q3 angesteuert, so daß er leitend wird. Dadurch wird ein dem sekundärseitigen Signal entsprechendes Signal über den Komparator IC3 auf den ersten Speicherkondensator C3 geleitet, so daß dieser aufgeladen wird und bei Überschreiten eines bestimmten Ladezustandes ein Ausgangssignal auf den Auslöser über die Klemmen 34, 33 abgibt.

Zur Entkopplung sind bei der erfindungsgemäßen Schaltungsanordnung der Transistor Q3, der Komparator IC3 und einer Diode D19 vorgesehen. Aufgrund der Ansteuerung des Transistors Q3 in Verbindung mit dem Komparator IC3 wird der Speicherkondensator C3 nur dann aufgeladen, wenn ein Gleichfehlerstrom mit dem Nennwert (oder größer diesem) auftritt.

Aufgrund des Transistors Q3 und des Komparators IC3 wird ein Fehlerstrom, der geringer ist als der Nennfehlerstrom, nicht durchgeschaltet, und darüber hinaus wird über die Gleichrichterdiode D19 in Verbindung mit dem Komparator IC3 und dem Transistor Q3 eine umgekehrte Entkoppelung erzielt, so daß eine Beeinflussung der Teileinrichtung 18 durch die Teileinrichtung 16 ebenfalls verhindert ist.

Sowohl die Schaltungsanordnung 18 als auch die Schaltungsanordnung 16 arbeiten über die Klemmen 34 und 33 gemeinsam auf einen Auslöser, wobei eine gegenseitige Beeinflussung der beiden Schaltungsanordnungen 16 und 18 nicht gegeben ist.

Aufgrund der besonders einfachen Ausgestaltung (hinsichtlich der geringen Verlustleistung) des Sinusgenerators mit dem Operationsverstärker IC2 kann die gesamte Schaltungsanordnung inklusive Netzteil auf eine Leiterplatte aufgesetzt werden, wodurch der Platzbedarf deutlich verringert wird.

## Patentansprüche

1. In ein abzusicherndes Netz einbaubare Fehlerstromschutzschaltungsanordnung, mit einem Schaltschloß, das von einem Auslöser bei Auftreten eines Fehlerstromes entklinkt wird und dabei im Netz befindliche Kontaktstellen bleibend öffnet, mit einer ersten Teileinrichtung mit einem ersten Summenstromwandler, dessen Sekundärsignal dem Auslöser zugeführt wird, so daß bei Auftreten eines Fehlerstromes der Auslöser netzspannungsunabhängig auslöst, und mit einer zweiten Teileinrichtung mit einem zweiten Summenstromwandler, dessen Kern von einer vom Netz versorgten Vormagnetisierungseinrichtung vormagnetisiert wird, wobei bei Auftreten eines Fehlerstromes, insbesondere eines Gleichfehlerstromes, der Arbeitspunkt des Kerns verändert wird, so daß ein Signal generiert wird, das dem Auslöser zuführbar ist und dieser netzspannungsabhängig auslöst, **dadurch gekennzeichnet, daß** die erste Teileinrichtung (10) eine Energiespeicherschaltung mit einem ersten Energiespeicher (C3) ist, daß die Vormagnetisierungseinrichtung der zweiten Teileinrichtung (18) ein Oszillator ist, der den Kern mit einer vorbestimmten Frequenz vormagnetisiert, daß die zweite Teileinrichtung (18) über einen steuerbaren Halbleiter (Q3) und einen Schwellwertschalter (IC3) mit dem ersten Energiespeicher (C3) verbunden ist, so daß bei Auftreten eines Fehlerstromes der erste Energiespeicher erst bei Erreichen eines vorbestimmten Fehlerstromes aufgeladen wird, und daß zur Entkopplung beider Teile zwischen dem ersten Energiespeicher (C3) und dem Schwellwertschalter (IC3) eine Diode (D19) vorgesehen ist, die zum ersten Energiespeicher (C3) hin in Durchlaßrichtung geschaltet ist.

2. Fehlerstromschutzschaltungsanordnung nach Anspruch 1, **dadurch gekennzeichnet, daß** die zweite Teileinrichtung (18) einen Sinusgenerator als Oszillator aufweist.

3. Fehlerstromschutzschaltungsanordnung nach Anspruch 1 oder 2, **dadurch gekennzeichnet, daß** die zweite Teileinrichtung (18) einen zweiten Energiespeicher (C10) aufweist, der bei Erreichen eines bestimmten Ladezustandes den steuerbaren Halbleiter (Q3) ansteuert, so daß dem ersten Energiespeicher (C3) ein dem von der zweiten Teileinrichtung (18) detektierten Fehlerstrom entsprechendes Signal zuführbar ist.

4. Fehlerstomschutzschaltungsanordnung nach einem der Ansprüche 1 bis 3, **dadurch gekennzeichnet, daß** beide Auslöseeinrichtungen auf einer gemeinsamen Leiterplatte aufgebaut sind.

5. Fehlerstromschutzschaltungsanordnung nach einem der vorherigen Ansprüche, **dadurch gekennzeichnet, daß** der Prüfkreis dem zweiten Summenstromwandler (10) zugeordnet ist.

## Claims

1. A residual-current-operated circuit-breaker arrangement to be installed in a network to be secured, comprising a latching mechanism which is unlatched by a trip element on the occurrence of a residual current and permanently opens contact points situated in the network, a first partial device with a first summation current transformer whose secondary signal is supplied to the trip element, so that upon occurrence of the residual current the trip element will trip independent of the system voltage, and a second partial device with a second summation current transformer whose core is biased by a biasing device supply by the network, with the operating point of the core being changed upon occurrence of a residual current, especially a DC fault current, so that a signal is generated which can be supplied to the trip element and the same will trip independent of the system voltage, **characterized in that** the first partial device (10) is an energy storage circuit with a first energy store (C3), that the biasing device of the second partial device (18) is an oscillator which biases the core with a predetermined frequency, that the second partial device (18) is connected with the first energy store (C3) via a controllable semiconductor (Q3) and a trigger (IC3), so that upon the occurrence of a residual current the first energy store will only be charged upon reaching a predetermined residual current, and that for uncoupling both parts a diode (D19) is provided between the first energy store (C3) and the trigger (IC3), which diode is switched in the conducting direction towards the first energy store (C3).

2. A residual-current-operated circuit-breaker arrangement according to claim 1, **characterized in that** the second partial device (18) comprises a sine generator as an oscillator.

3. A residual-current-operated circuit-breaker arrangement according to claim 1 or 2, **characterized in that** the second partial device (18) comprises a second energy store (C10) which upon reaching a certain charging state will trigger the controllable semiconductor (Q3), so that the first energy store (C3) can be supplied with a signal corresponding to the residual current detected by the second partial device (18).

4. A residual-current-operated circuit-breaker arrangement according to claim 1 or 3, **characterized in that** both trip devices are arranged on a common printed-circuit board.

5. A residual-current-operated circuit-breaker arrangement according to one of the preceding claims, **characterized in that** the test circuit is associated with the second summation current transformer.

## Revendications

1. Système de circuit de protection de courant de défaut à la terre à incorporer dans un réseau à sécuriser, comportant
- un verrouillage de connexion qui est désencliqueté par un déclencheur quand apparaît un courant de défaut, en ouvrant ainsi en permanence des points de contact se trouvant dans le réseau,
- un premier dispositif partiel comportant un premier transformateur d'intensité totale, dont le signal secondaire est envoyé au déclencheur, de sorte que quand apparaît un courant de fuite, le déclencheur fonctionne indépendamment de la tension du réseau,
- un second dispositif partiel avec un second transformateur d'énergie totale dont le noyau est prémagnétisé par un dispositif de prémagnétisation alimenté par le réseau, de sorte que quand apparaît un courant de fuite, notamment un courant de fuite continu, le point de fonctionnement du noyau est modifié avec génération d'un signal qui peut être envoyé au déclencheur qui fonctionne alors indépendamment de la tension du réseau,
**caractérisé en ce que**
- le premier dispositif partiel (10) est un circuit comportant un premier réservoir d'énergie (C3),
- le dispositif de prémagnétisation du second dispositif partiel (18) est un oscillateur qui prémagnétise le noyau à une fréquence prédéfinie,
- le second dispositif partiel (18) est relié par un semiconducteur (Q3) commandable et par un commutateur à valeur de seuil (IC3) au premier réservoir d'énergie (C3), de sorte que quand apparaît un courant de fuite, le premier réservoir d'énergie est chargé seulement quand est atteint un courant de fuite prédéfini,
- pour découpler les deux parties, il est prévu entre le premier réservoir d'énergie (C3) et le commutateur à valeur de seuil (IC3) une diode (D19) montée de manière à laisser passer le courant en direction du premier réservoir d'énergie (C3).

2. Système de protection de courant de défaut à la terre selon la revendication 1, **caractérisé en ce que** le second dispositif partiel (18) présente comme oscillateur un générateur d'ondes sinusoïdales.

3. Système de protection de courant de défaut à la terre selon la revendication 1 ou 2, **caractérisé en ce que** le second dispositif partiel (18) présente un second réservoir d'énergie (C10) qui commande le semiconducteur (Q3) quand est atteint un certain état de charge, de sorte qu'un signal correspondant au courant de défaut détecté par le second dispositif partiel (18) peut être envoyé au premier réservoir d'énergie (C3).

4. Système de protection de courant de défaut à la terre selon une des revendications 1 à 2, **caractérisé en ce que** les deux dispositifs de déclenchement sont montés sur un circuit imprimé commun.

5. Système de protection de courant de défaut à la terre selon une des revendications précédentes, **caractérisé en ce que** le circuit de contrôle est associé au second transformateur d'intensité totale.
